# EUROPEAN PATENT APPLICATION

(11) **EP 2 340 985 A1**
(43) Date of publication of application: **06.07.2011**
(21) Application number: 10015672.8
(22) Date of filing: 15.12.2010
(51) Int. Cl.: B62J 6/04, B62J 6/18

(54) **Wireless brake light and signal indicator for transportation**

(30) Priority: 18.12.2009 TW 098143515
(71) Applicant: A-Team Design Group Co., Ltd., Taoyuan City T'ao yuan (TW)
(72) Inventor: Ni, Kuan-Chun, Taoyuan City Taoyuan County (TW)
(74) Representative: De Anna, Pier Luigi

(57) **Abstract**

A wireless brake light and signal indicator for transportation for bicycle for transportation has a front controller (10) mounted on a handlebar of a bicycle, a brake signal generator (20) mounted to a brake lever and connected to the front controller (10), and a tail signal indicator (30) wirelessly controlled by the front controller (10). The brake signal generator (20) has an insulation body and two strip electrodes (21, 22) sleeved therein. The strip electrodes (21, 22) are mutually isolated. The insulation body has a resilient portion (201) formed at one end thereof. The resilient portion (201) aligns with the brake lever. Once the brake lever is gripped, the resilient portion (201) is compressed so that the strip electrodes (21, 22) are shorted to send a brake signal to the front controller (10). The front controller (10) wirelessly activates a brake light to warn vehicles or pedestrians behind.

## Description

### 1. Field of the Invention

The present invention is related to a brake signal indicator for transportation, and more particularly to a wireless brake light and signal indicator for transportation instantaneously detecting a braking or turning action of a cyclist and wirelessly activating a corresponding light of a bicycle.

### 2. Description of the Related Art

Bicycles have become an increasingly popular leisure activity in recent years for being recreational and sporty. Cyclists may ride bicycles on the road full of vehicles and pedestrians instead of just riding in parks or in around a neighborhood. To deal with more dangerous cycling conditions, similar to motorcycles and vehicles, bicycles are preferably equipped with many signal indicators, such as direction indicator, brake indicator, and the like, to protect cyclists at day and night. Therefore, to achieve safer cycling, more and more signal indicator sets dedicated to bicycles are available for cyclists.

Currently, a light set of a bicycle including a front light and a tail light gradually becomes common accessories for lighting purpose. If a direction light set and a brake light are further equipped, the direction light set must be controlled by cyclists since it is direction-dependent, and the brake light must be immediately activated once a braking action of cyclists is detected. By controlling both lights and the bicycle cyclists become inundated, so such systems are not popular. However, besides basic product requirements, aesthetic appeal of bicycles remains important. Any physical change compromising bicycle appearance is not easily accepted. In that sense, open wiring for signal transmission totally runs counter to such aesthetic consideration.

As disclosed earlier, the brake light is activated after being triggered by a braking action. Conventional bicycles employ a G-sensor to detect a significant deceleration of bicycles and interpret this as a braking action. The drawback is rather high chance of malfunction regarding responding action and time. If immediacy and sensitivity are both important criteria to complete a braking action, the G-sensor needs to be further refined.

Furthermore, when parked outdoors, bicycles or accessories thereof are easily stolen when bicycle security is a concern. A signal indicator set should be easily removed and mounted.

An objective of the present invention is to provide a wireless brake light and signal indicator for transportation to instantaneously detect a braking or turning action of a cyclist and wirelessly activate a corresponding light of a bicycle.

To achieve the foregoing objective, the wireless brake light and signal indicator for transportation has a front controller, a brake signal generator and a tail signal indicator.

The front controller has a control unit and a front transceiving module. The control unit has a plurality of input and output terminals. The front transceiving module is connected to the corresponding input and output terminals of the control unit.

The brake signal generator is adapted to mount to a brake lever of a bicycle, and has an insulation body and two strip electrodes. The insulation body takes a slender form. The two strip electrodes are sleeved by the insulation body and are mutually isolated. One end of each of the two strip electrodes is constantly open and the other ends thereof are electrically connected with the front controller.

The tail signal indicator has a processor, a rear transceiving module and a plurality of light sets. The processor has a plurality of output terminals. The rear transceiving module is connected with the processor and wirelessly connects with the front transceiving module of the front controller. The plurality of light sets are respectively connected with the output terminals of the processor.

As the resilient portion of the brake signal generator is sleeved around a brake lever, the brake signal generator directly detects an action when the cyclist activates the brake lever. Once the cyclist grips the brake lever, the resilient portion is compressed and two electrodes inside the resilient portion are electrically connected, and a signal is sent to the control unit of the front controller. The control unit further transmits a control signal to the front transceiving module. The front transceiving module encodes the control signal and then transmits the control signal. After the rear transceiving module receives the control signal and decodes it, the control signal is sent to the processor. The processor then activates corresponding light sets to illuminate. The light sets have a left turn light, a right turn light, a tail light and a brake light and thus provide sufficient cycling status information to vehicles behind so as to ensure cycling safety.

### IN THE DRAWINGS

Fig. 1 is a perspective view of a front controller and a brake signal generator of a wireless brake light and signal indicator for transportation in accordance with the present invention;
Fig. 2 is a perspective view of a tail signal indicator of the wireless brake light and signal indicator for transportation in accordance with the present invention;
Figs. 3A to 3D are circuit diagrams of the front controller of the wireless brake light and signal indicator for transportation in Fig. 1;
Fig. 4A to 4D are circuit diagrams of the tail signal indicator of the wireless brake light and signal indicator for transportation in Fig. 2;
Fig. 5 is a perspective view of the brake signal generator of the wireless brake light and signal indicator for transportation in accordance with the present invention;
Fig. 6 is a cross-sectional view of the brake signal generator in Fig. 5; and
Fig. 7 is another cross-sectional view of the brake signal generator in Fig. 5.

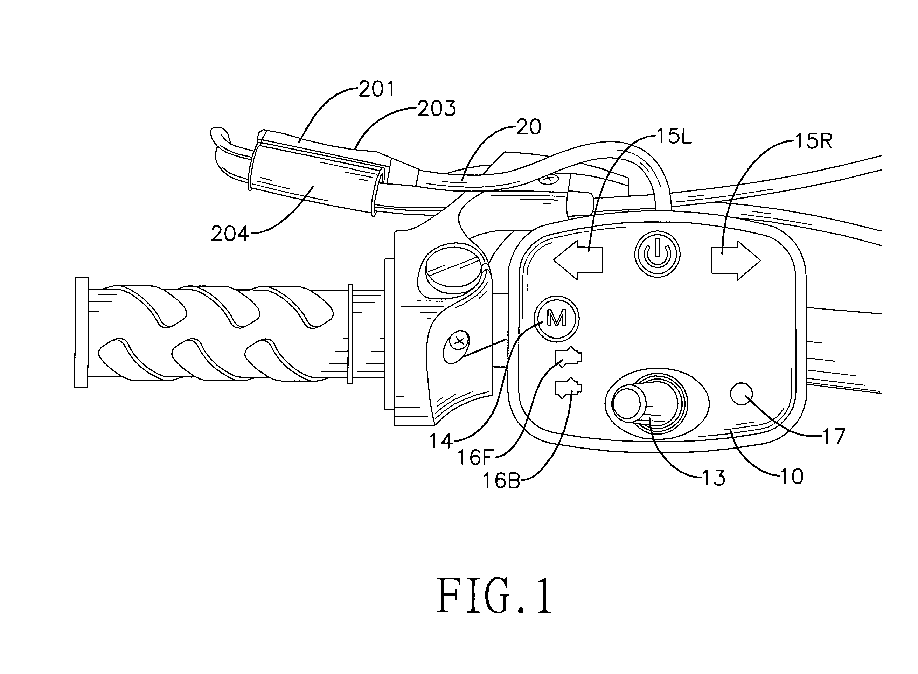

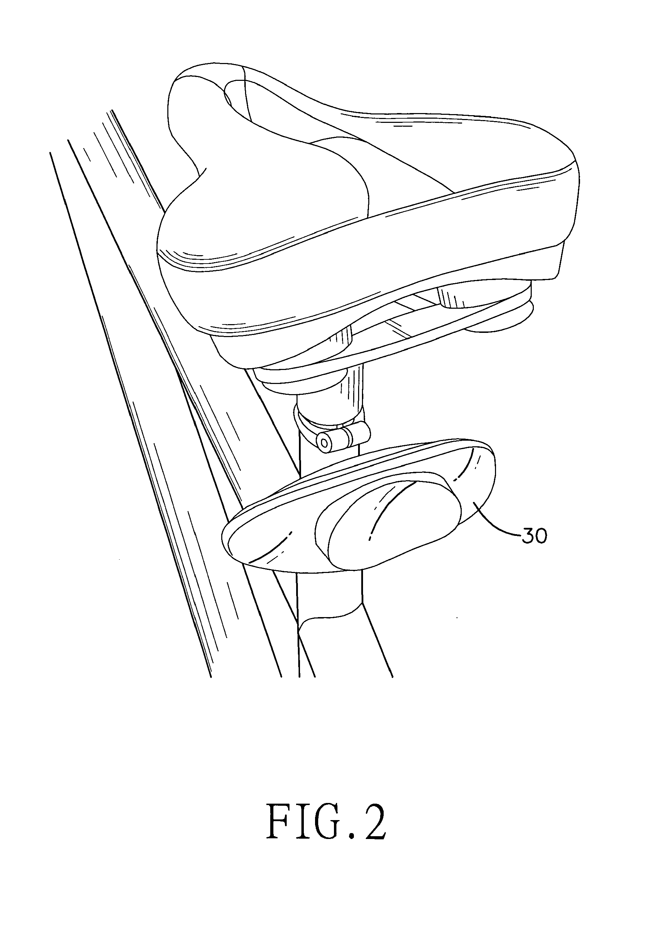

With reference to Figs. 1 and 2, a wireless brake light and signal indicator for transportation in accordance with the present invention has a front controller 10, a brake signal generator 20 and a tail signal indicator 30. The front controller 10 is mounted on a handle bar. The brake signal generator 20 is mounted on a brake lever and is electronically connected with the front controller 10. The tail signal indicator 30 is mounted on a seat post of the bicycle and is wirelessly connected with the brake signal generator 20. The brake signal generator 20 generates a brake signal in response to a braking motion initiated by a cyclist of the bicycle on gripping the brake lever and transmits the brake signal to the front controller 10. After receiving the brake signal, the front controller 10 wirelessly transmits a control signal to the tail signal indicator 30 to illuminate the tail signal indicator 30.

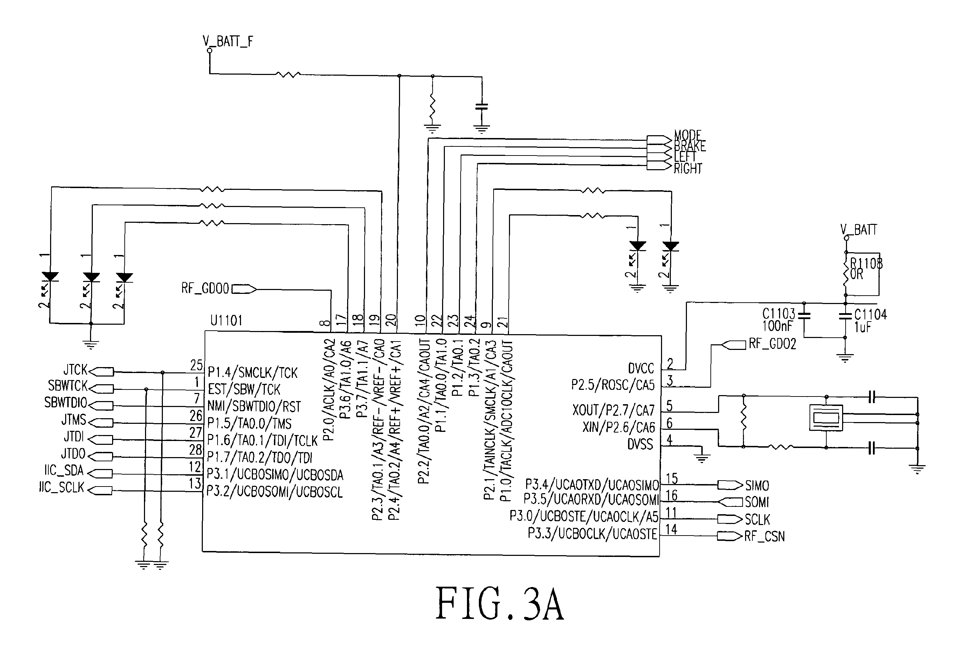

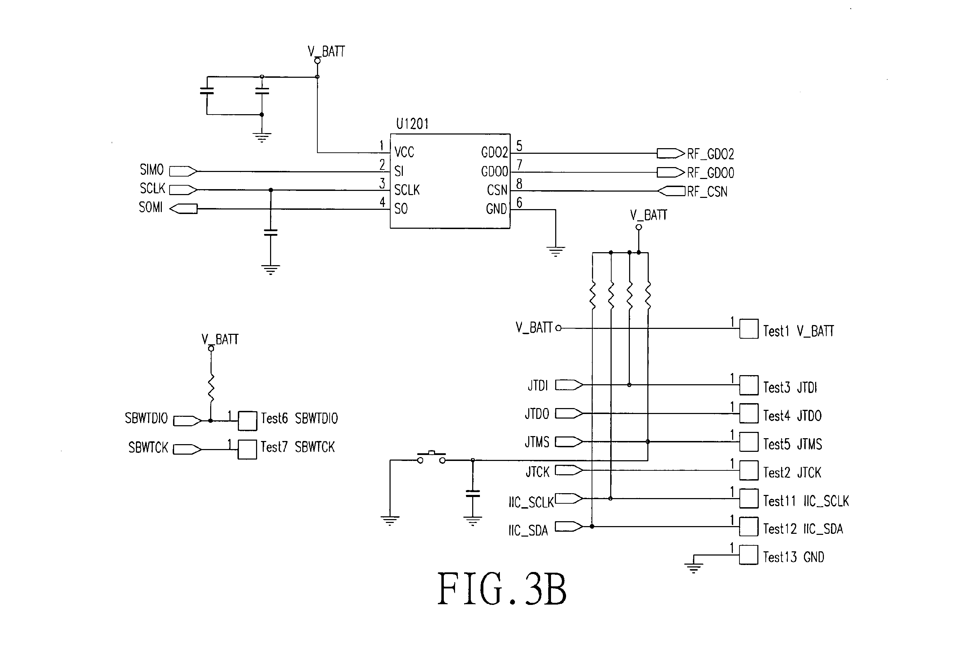

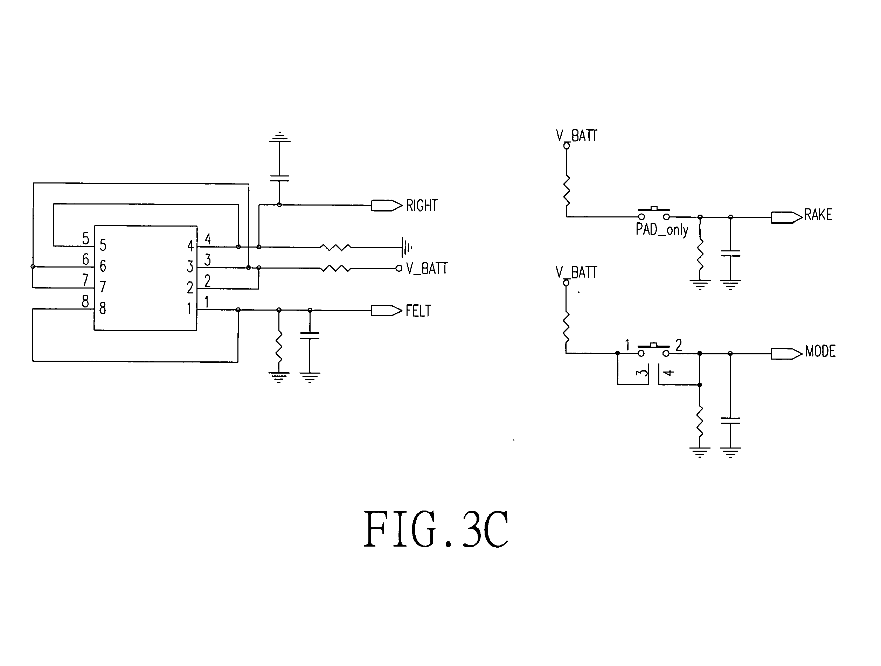

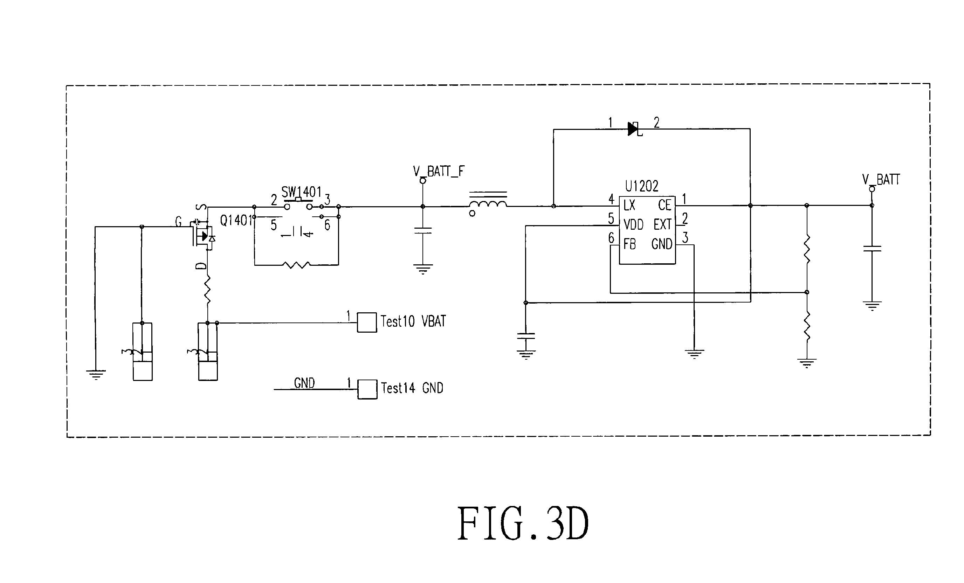

With further reference to Figs. 3A to 3D, detailed circuit diagrams of the front controller 10 are illustrated to indicate that the front controller 10 has a control unit 11, a front transceiving module 12, a multi-positioned switch 13, a mode switch 14 and a power supply module 18. The control unit 11 may be a micro-controller unit (MCU) and is connected with the brake signal generator 20 and the mode switch 14 to transmit the control signal in response to the brake signal generated by the brake signal generator 20 or a turn signal generated by the multi-positioned switch 13. The front transceiving module 12 is connected with input terminals and output terminals of the control unit 11 to encode the control signal transmitted from the control unit 11, decode a received signal from the tail signal indicator 30 and transmit the decoded signal to the control unit 11. In the present embodiment, the front transceiving module 12 employs the Manchester coding scheme to transmit and receive signals through the 2.4G frequency band. Such coding scheme and frequency band prevent several adjacent operating front transceiving modules 12 from interfering with each other and prevent malfunctioning thereof.

The multi-positioned switch 13 is a switch having multiple connection terminals, and each connection terminal is connected with an input terminal of the control unit 11. In the present embodiment, the multi-positioned switch 13 can be shifted to two directions, specifically to the left and to the right, so as to generate the turn signal and turn on a left turn light or a right turn light. Two connection terminals, LEFT and RIGHT, of the multi-positioned switch 13 are connected with corresponding input terminals of the control unit 11.

The mode switch 14 is connected with an input terminal of the control unit 11 to generate a mode switching signal to the control unit 11. The control unit 11 then generates the control signal based on the brake signal or the turn signal and the mode switching signal.

The power supply module 18 is used to supply an operating power required by each circuit and each component inside the front controller 10, and has a voltage regulator and a battery. The voltage regulator regulates a DC power supplied by the battery and supplies the operating power of the front controller 10.

Some of the output terminals of the control unit 11 are connected with multiple LEDs, specifically, a left turn indicator 15L, a right turn indicator 15R, a front low power indicator 16F, a rear low power indicator 16B, and an operating indicator 17.

When sending the control signal to activate the tail signal indicator 30, the control unit 11 simultaneously turns on a corresponding indicator for the cyclist to refer to and verify. The control unit 11 constantly monitors if a power capacity of the battery in the front controller 10 is below a threshold value, and turns on the front low power indicator 16F to indicate a low power status of the front controller 10. Meanwhile, if the front transceiving module 11 receives a low power signal from the tail signal indicator 30, the front transceiving module decodes the low power signal and sends it to the control unit 11, and then the control unit 11 activates the rear low power indicator 16B to indicate a lower power status of the tail signal indicator 30. When the power of the front controller 10 and the power of the tail signal indicator 30 are both low, the front and rear low power indicators 16F, 16B are both lit to inform the cyclist to replace or charge the battery.

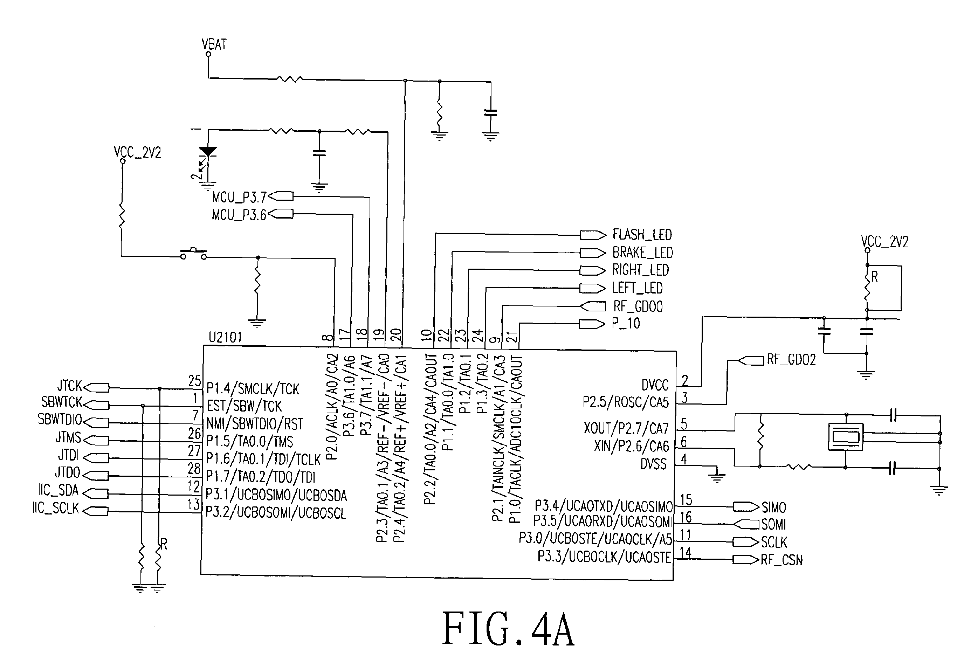

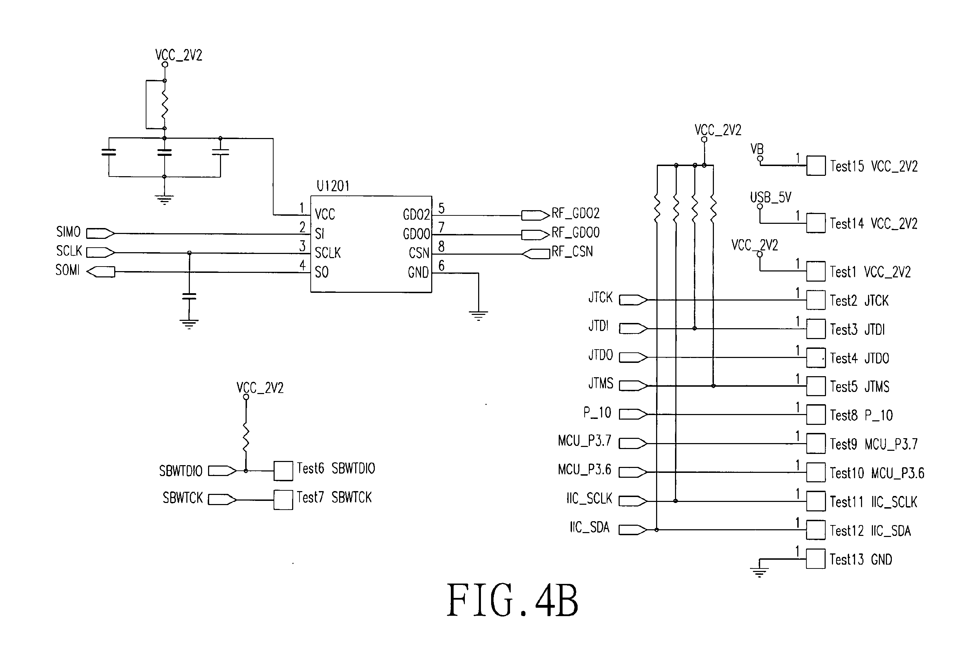

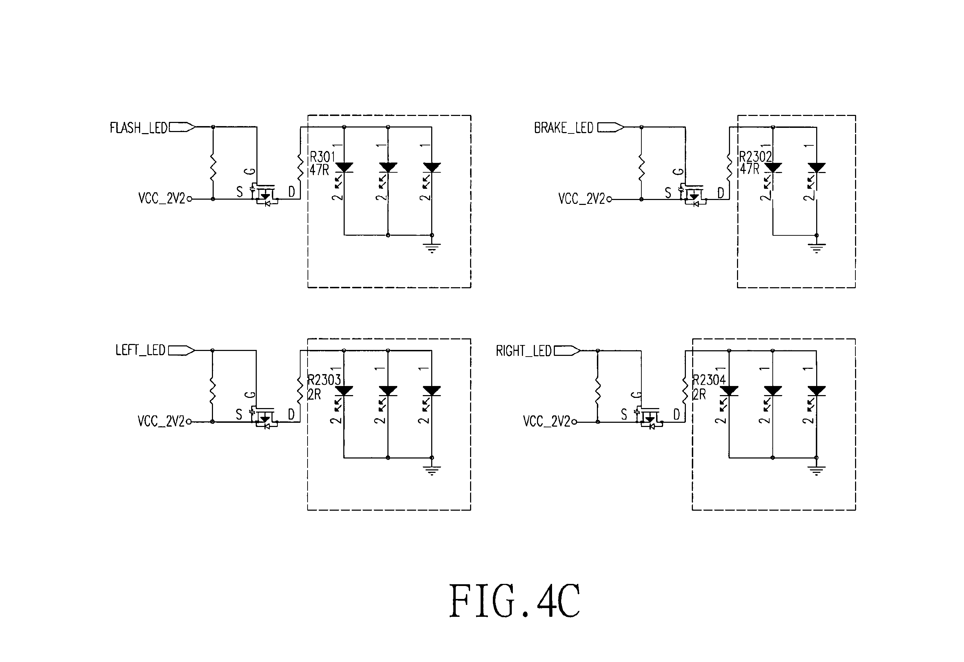

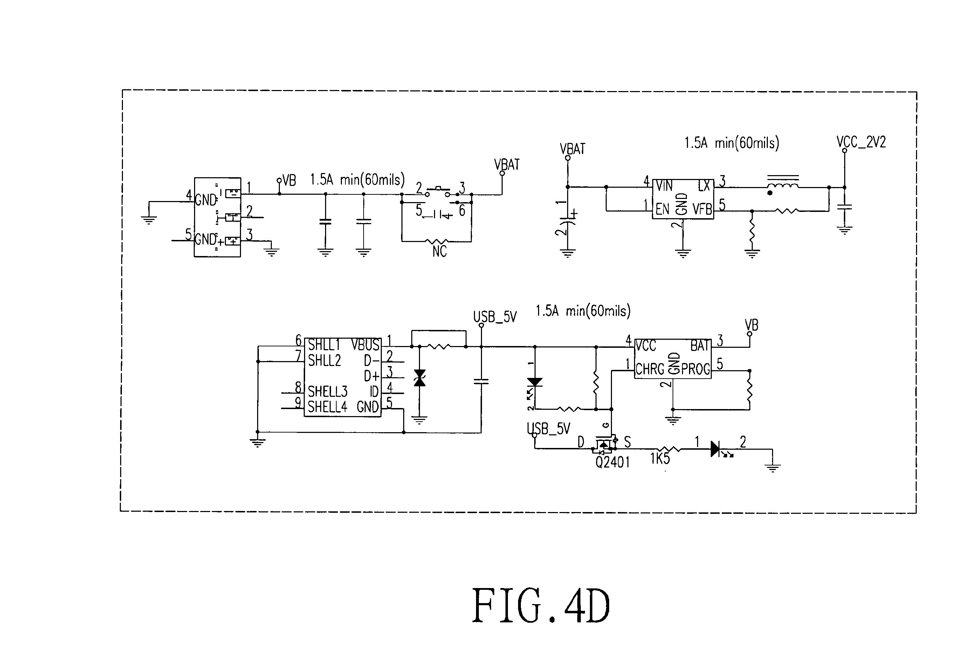

With reference to Figs. 4A to 4D, detailed circuit diagrams of the tail signal indicator 30 are illustrated to indicate that the tail signal indicator 30 has a processor 31, a rear transceiving module 32, multiple light sets 33A - 33D, and a power supply and charging module 34.

The rear transceiving module 32 is connected with multiple input terminals and output terminals of the processor 31, is wirelessly connected to the front transceiving module 12 inside the front controller 10, and employs the Manchester coding scheme to transmit and receive signals through the 2.4G frequency band.

The multiple light sets 33A - 33D pertain to a tail light, a brake light, a left turn light and a right turn light. In the present embodiment, each light set is composed of multiple parallelly connected LEDs and is connected to an output terminal of the processor 31 through a transistor 35. When receiving the control signal sent from the front controller 10 through the rear transceiving module 32, the processor 31 activates the corresponding light set 33A - 33D through the transistor 35 to perform functions of the signal indicators designated by the front controller 10.

The power supply and charging module 34 has a charger 341, a voltage regulator 342 and a rechargeable battery. The charger 341 is electrically connected with the rechargeable battery to charge the rechargeable battery when the power capacity of the rechargeable battery is below a threshold value. After being regulated by the voltage regulator 342, the voltage of the rechargeable battery supplies the operating power required by each circuit and light set inside the tail signal indicator 30. The power supply and charging module 34 further has an interface connector 343 electrically connected with the charger 341 and may be a USB interface connector so that the interface connector 343 can be connected with a USB port to perform charging. The rechargeable battery is further connected with a power detection terminal of the processor 31 to determine the power capacity of the rechargeable battery. When the power capacity of the rechargeable is low or below the threshold value and the processor 31 detects the condition and the processor 31 sends a low power signal to the rear transceiving module 32, the rear transceiving module 32 encodes the low power signal and then transmits the encoded low power signal to the front transceiving module 12 of the front controller 10. After decoding the low power signal, the front transceiving module 12 transmits the low power signal to the control unit 11 and the control unit 11 activates the rear low power indicator 16B.

The processor 31 has the following operating modes of driving the tail light:
1) Fast blinking
2) Slow blinking
3) Constantly lit
4) Not lit

The operating mode of the left turn indicator or the right turn indicator is when the tail light is blinking, the tail light stops blinking and is constantly lit and the left or right turn indicator blinks.

The operating mode of the brake indicator is when the tail light is blinking or constantly lit, the tail light stops blinking and is constantly lit and the brake light is also constantly lit.

The operating mode of the brake indicator is performed by using the front controller 10 to receive the brake signal transmitted from the brake signal generator 20 or the multi-positioned switch 13 and then wirelessly transmit the control signal to the tail signal indicator 30, and using the processor 31 of the tail signal indicator 30 to drive the brake light or the left or right turn light and the tail light according to the operating mode.

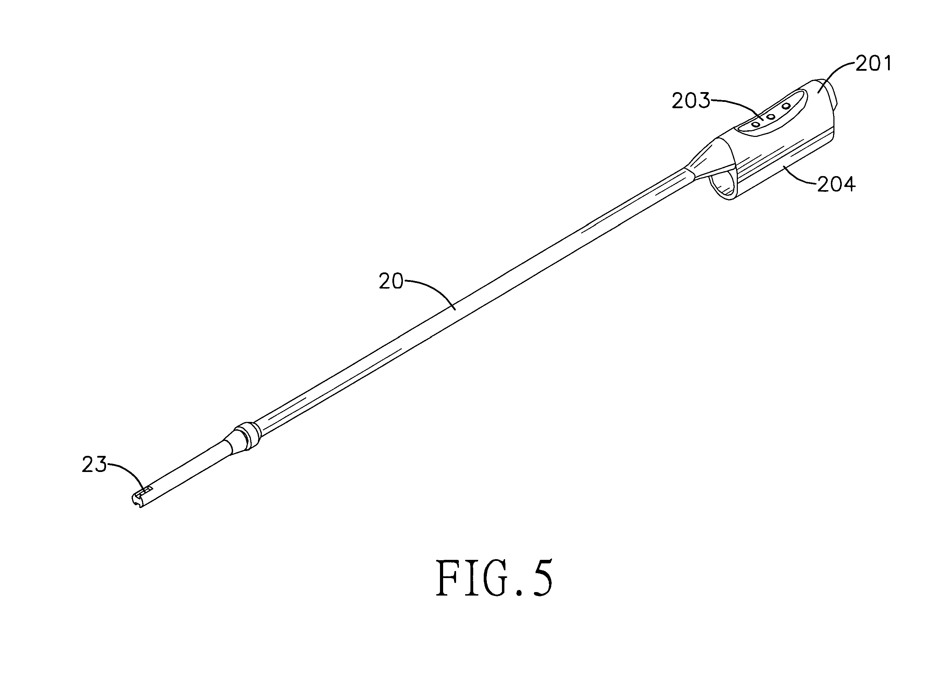

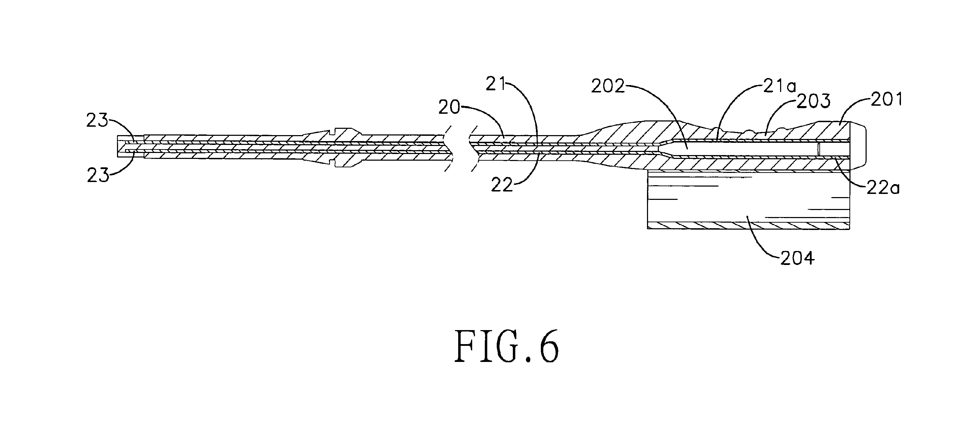

With reference to Figs. 5 to 7, the brake signal generator 20 has a slender insulation body, a hollow resilient portion 201, two strip electrodes 21, 22, and two contact electrodes 21a, 22a. The insulation body is integrally formed by rubber and encapsulates parts of the two strip electrodes 21, 22. Approximately having the length of the insulation body, the two strip electrodes 21, 22 are made of copper and separated by the insulation body. One end 23 of each of the two strip electrodes 21, 22 is exposed beyond the insulation body. The exposed ends of the two strip electrodes 21, 22 are electronically connected with the front controller 10 by a proper means, such as welding. The resilient portion 201 extends from one end of the insulation body and has a length slightly longer than a width of a palm and an outer diameter slightly larger than that of the insulation body. A compressible space 202 is defined in the resilient portion 201. The two contact electrodes 21a, 22a extend from the other ends of the corresponding strip electrodes 21, 22, and are respectively mounted on two opposite positions of an inner wall of the compressible space 202.

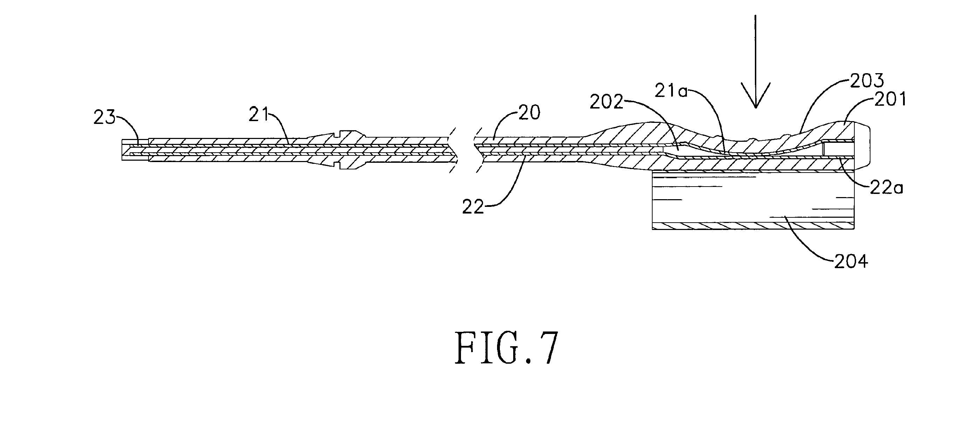

Furthermore, the resilient portion 201 has a recessed arced portion 203 formed on a front portion of the resilient portion 201 and a sleeve 204 integrally formed with a rear portion of the resilient portion 201. The sleeve 204 is approximately identical to the resilient portion 201 in length. With further reference to Fig. 1, the brake signal generator 20 is mounted on a brake lever by inserting the brake lever into one end of the sleeve 204 of the insulation body and aligning the sleeve 204 with a force application portion of the brake lever. When cyclist abuts against the arced portion 203 to grip the brake lever with one finger (for example, index finger), the resilient portion 201 is simultaneously compressed so that the contact electrodes 21a, 22a are electrically connected as shown in Fig. 7. The brake signal is then sent to the control unit 11 of the front controller 10, and the control unit 11 transmits a control signal to activate the brake light of the tail signal indicator 30 through the front wireless transcesiving module 12.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A wireless brake light and signal indicator for transportation for transportation, comprising:
a tail signal indicator (30) having:
a plurality of light sets (33A ~ 33D);
**characterized in that**
a front controller (10) has:
a control unit (11) having a plurality of input and output terminals; and
a front transceiving module (12) connected to the corresponding input and output terminals of the control unit (11);
a brake signal generator (20) is adapted to be mounted to a brake lever of a bicycle, and has:
an insulation body taking a slender form; and
two strip electrodes (21, 22) sleeved by the insulation body and mutually isolated, one end of each of the two strip electrodes (21, 22) being constantly open and the other ends thereof electrically connected with the front controller (10); and
the tail signal indicator (30) has:
a processor (31) having a plurality of output terminals;
a rear transceiving module (32) connected with the processor (31) and wirelessly connecting with the front transceiving module (12) of the front controller (10); and
the plurality of light sets (33A ~ 33D) respectively connected with the output terminals of the processor (31).

2. The wireless brake light and signal indicator as claimed in claim 1,
wherein the tail signal indicator (30) further comprises a power supply and charging module (34) having
a rechargeable battery;
a charger (341) electrically connected with the rechargeable battery to charge the rechargeable battery when a power capacity of the rechargeable battery is below a threshold value; and
a voltage regulator (342) regulating a DC voltage outputted by the rechargeable battery to supply the DC voltage to the processor (31), the rear transceiving module (32) and the plurality of light sets (33A - 33D).

3. The wireless brake light and signal indicator as claimed in claim 2,
wherein the power supply and charging module (34) further has a USB interface connector (343) electrically connected with the charger (341) and adapted to perform charging through a connected USB port of a computer.

4. The wireless brake light and signal indicator as claimed in claim 3,
wherein each light set of the tail signal indicator (30) is composed of multiple LEDs and is connected with a corresponding output terminal of the processor (31) through a transistor (35).

5. The wireless brake light and signal indicator as claimed in claim 4,
wherein the front controller (10) has a multi-positioned switch (13) having multiple connection terminals, and two of the connection terminals are connected with two of the input terminals of the control unit (11).

6. The wireless brake light and signal indicator as claimed in claim 5,
wherein two of the input terminals of the control unit (11) are respectively connected with the brake signal generator (20) and a mode switch (14).

7. The wireless brake light and signal indicator as claimed in claim 6,
wherein
the plurality of output terminals of the control unit (11) are connected with multiple LEDs representing a left turn indicator (15L), a right turn indicator (15R), a front low power indicator (16F), a rear low power indicator (16B), and an operating indicator (17); and
the front controller (10) further comprises a power supply module having a voltage regulator (342) and a battery to supply an operating power required by the front controller (10).

8. The wireless brake light and signal indicator as claimed in claim 7,
wherein the front transceiving module (12) and the rear transceiving module (32) employ Manchester coding scheme and transmit signals through a 2.4G frequency band.

9. The wireless brake light and signal indicator as claimed in claim 8,
wherein one of the output terminals of the control unit (11) is further connected with an operating indicator.

10. The wireless brake light and signal indicator as claimed in claim 9,
wherein the insulation body has a recessed arced portion (203) formed on a front portion of the resilient portion (201) and a sleeve (204) integrally formed with a rear portion of the resilient portion (201).

11. The wireless brake light and signal indicator as claimed in any one claims 1 to 10, wherein
the insulation body of the brake signal generator (20) is integrally formed by rubber and one end of the insulation body has:
a resilient portion (201) being hollow; and
a compressible space (202) formed inside the resilient portion (201) of the insulation body; and
the two strip electrodes (21, 22) are formed by copper and are sleeved by the insulation body, and one end of each of the two strip electrodes (21, 22) protrude beyond the compressible space (202) of the resilient portion (201) and are constantly open.
